# EUROPEAN PATENT APPLICATION

(11) **EP 4 650 581 A1**
(43) Date of publication of application: **19.11.2025**
(21) Application number: 24892485.4
(22) Date of filing: 08.04.2024
(51) Int. Cl.: F02B 37/18, F01D 17/14

(54) **VARIABLE-GEOMETRY TURBINE DEVICE**

(30) Priority: 25.03.2024 CN 202410341478
(71) Applicant: Jiangsu Easyland Automotive Corporation, Wuxi, Jiangsu 214174 (CN)
(72) Inventor: LIU, Quan, Wuxi, Jiangsu 214174 (CN); MA, Chao, Wuxi, Jiangsu 214174 (CN); HUANG, Jianjun, Wuxi, Jiangsu 214174 (CN); XIONG, Xinyuan, Wuxi, Jiangsu 214174 (CN); CHEN, Zhanhao, Wuxi, Jiangsu 214174 (CN); WANG, Quan, Wuxi, Jiangsu 214174 (CN); SUN, Yangli, Wuxi, Jiangsu 214174 (CN)
(74) Representative: Herrero & Asociados, S.L.
(86) International application number: PCT/CN2024/086611
(87) International publication number: WO 2025/200047

(57) **Abstract**

The invention discloses a variable geometry turbine device, which relates to the field of turbocharger technologies. The variable geometry turbine device includes: a turbine casing provided with an inlet duct, and defining an exhaust port and a bypass chamber therein; a gear rotating sleeve disposed inside the bypass chamber; a rack actuator; combined nozzle guide vanes including: a fixed nozzle fixedly disposed on a first nozzle wall surface of the turbine casing and an elastic nozzle mechanism; and a turbine. A first annular chamber and a second annular chamber are defined between the exhaust port and the bypass chamber. A first radial channel and a second radial channel are defined under the bypass chamber, and are connected to the first annular chamber and the second annular chamber respectively. A side of the gear rotating sleeve defines a first notch and a second notch configured to be selectively connected to the first radial channel and the second radial channel respectively; and opening and closing of the first radial channel and the second radial channel have a time difference. The device is a highly reliable and efficient turbine device across the entire operating range.

## Description

### TECHNICAL FIELD

The invention relates to the field of turbocharger technologies, and more particularly to a variable geometry turbine device.

### BACKGROUND

In the related art, internal combustion engines, being significant emission sources, urgently require technological upgrades for energy conservation and emission reduction. Turbocharging technology, as an important measure for the internal combustion engines to achieve energy conservation and emission reduction, has played a key role and been widely applied in various development stages of the internal combustion engine technology upgrades. However, as a typical radial flow turbomachinery, a turbocharger has a relatively narrow range of high-efficiency operation, when the turbocharger is matched with a reciprocating internal combustion engine, an engine cannot operate efficiently across an entire operating range.

It is common to match a turbine of the turbocharger according to key operating conditions of the engine. Under these conditions, the turbine has an appropriate flow capacity, thus enabling the turbocharger to ensure smooth exhaust of the engine and provide required boost gas. When the engine operates at higher conditions, excess exhaust energy is released through a waste gate to avoid turbocharger overspeed and significant engine performance degradation caused by exhaust blockage. When the engine operates at lower conditions, the turbine has a larger flow capacity, and the exhaust pressure cannot be well established, resulting in insufficient boost pressure and inadequate fresh air intake, which also prevents significant engine performance improvement.

Therefore, to address the above issues, the turbocharging field has developed technologies such as variable nozzle turbine (VNT), sequential turbo charging (STC), and two-stage turbocharging. Among these, the STC and the two-stage turbocharging, which require multiple turbochargers to be used in series or parallel, result in a more complex system and have a narrower range of applications, being used only in some high-end marine engines. The VNT typically involves installing an adjustable nozzle mechanism at the turbine end of a conventional turbocharger to realize the adjustability of a throat area of a turbine nozzle, thereby matching different flow characteristics of the turbine according to different engine operating conditions. This avoids the need for bypass venting at high operating conditions in the conventional turbocharger, which wastes exhaust energy, and also overcomes the deficiency of insufficient boosting at low-speed operating conditions of the turbine. Therefore, this VNT technology is currently considered the most promising boosting technology for the next stage of carbon emission reduction in the internal combustion engines and the development of hydrogen fuel engines.

However, before the existing VNT is further widely used, there are still some important issues that need to be resolved. First, there is currently a reliability issue of the adjustable nozzle mechanism. To achieve the angle adjustability of nozzle vanes, a set of actuation mechanism is required. This actuation mechanism generally uses a stepper motor set in an electric control actuator to output a rotational motion according to a command, and then amplifies the rotational motion through a "four-bar linkage" to achieve the circumferential displacement of the adjustable nozzle fork, thereby realizing the angle adjustability of each nozzle vane. The actuation mechanism includes: the electric control actuator, the four-bar linkage, the fork, and the rotating nozzle vanes.

The actions executed include: the rotational motion output by the motor, the circumferential motion and translational displacement inside and outside the "four-bar linkage", the rotational motion of the fork, and the rotational motion of more than ten vanes around their individual pivot shafts under high-temperature conditions. Therefore, in actual use, "binding" of the actuation mechanism is the most common reliability issue. On the other hand, there is the issue of low efficiency at high and low operating conditions. The existing VNT adjusts the nozzle throat area by changing the angle of the nozzle vanes, and thus the flow capacity of the turbine can be adjusted to match the engine operating conditions. However, due to the wide range of engine operating conditions, the VNT needs to adjust the nozzle vane angle significantly in a range of 45°-85° to match the higher and lower operating conditions of the engine, which is far from an optimal vane angle range of 65°-75°. This results in a mismatch between the tangential velocity of the airflow exiting the nozzle guide vanes and the circumferential velocity of the turbine inlet blades, leading to a large attack angle of the turbine inlet airflow, causing the turbocharger thermal efficiency to be below 40% at both high and low engine operating conditions.

In summary, it is an urgent issue to be resolved by those skilled in the art that how to provide a variable geometry turbine device with high reliability and efficient operation across the entire operating range, and to achieve different degrees of turbine flow capacity adjustment under different engine operating conditions (low, medium, and high), solving the problem of significant reduction in turbine efficiency caused by a small nozzle opening angle at low-speed operating conditions and a large nozzle opening angle at high engine operating conditions in traditional variable-angle turbines.

### SUMMARY

In view of the foregoing, the invention is to provide a variable geometry turbine device, which is a highly reliable and efficient turbine device across the entire operating range. In other words, the variable geometry turbine device can achieve adjustment of different degrees of turbine flow capacities under different engine operating conditions-low, medium, and high. The variable geometry turbine device can efficiently guide airflow both before and after the elastic nozzle mechanism is removed, thus solving the problem of significant reduction in turbine efficiency caused by a small nozzle opening angle at a low-speed operating condition and a large nozzle opening angle at a high engine operating condition in traditional variable-angle turbines.

In order to achieve the above purposes, the invention provides the following technical solutions.

A variable geometry turbine device includes: a turbine casing, a gear rotating sleeve, a rack actuator, combined nozzle guide vanes, and a turbine.

The turbine casing is provided with an inlet duct, and defines an exhaust port and a bypass chamber therein. The exhaust port and the bypass chamber are disposed in parallel, and both are in communication with the inlet duct. A first annular chamber and a second annular chamber are in communication with each other and are defined between the exhaust port and the bypass chamber. A first radial channel and a second radial channel are formed just below the bypass chamber and arranged along an axial direction of the bypass chamber, the first radial channel is in communication with the first annular chamber, the second radial channel is in communication with the second annular chamber, and a wall surface of the second annular chamber internally communicated with the exhaust port defines an air-bleed hole.

The gear rotating sleeve is disposed inside the bypass chamber. An end of the gear rotating sleeve defines an opening in communication with the inlet duct, and another end of the gear rotating sleeve is closed. A side of the gear rotating sleeve defines a first notch configured to be selectively connected and disconnected to the first radial channel, and a second notch configured to be selectively connected and disconnected to the second radial channel. Opening and closing of the first radial channel and the second radial channel have a time difference.

The rack actuator is connected to the another end being closed of the gear rotating sleeve and configured to drive the gear rotating sleeve to rotate circumferentially.

The combined nozzle guide vanes include: a fixed nozzle fixedly disposed on a first nozzle wall surface of the turbine casing, and an elastic nozzle mechanism. The elastic nozzle mechanism is configured to move reciprocally along an axial direction of the exhaust port under a cooperative action of a pressure difference and an elastic force, leaf-shaped notches are defined between the elastic nozzle mechanism and the fixed nozzle, and a position of each of the leaf-shaped notches along a radial direction of the exhaust port is lower than a throat position of the combined nozzle guide vanes.

The turbine is disposed inside the turbine casing, and a rotating shaft of the turbine is coaxially disposed with the exhaust port.

In an embodiment, a bypass opening of the bypass chamber connected to the inlet duct has a circular shape, a center of the bypass opening is coaxially disposed with an axis of the bypass chamber.

A thickness of a wall surrounding the bypass opening is greater than or equal to 3 millimeters (mm), and a diameter of the bypass opening is at least 3 mm less than a diameter of the bypass chamber.

In an embodiment, a gear slot is defined on the bypass chamber, the gear rotating sleeve is provided with a rotating sleeve gear at a position corresponding to the gear slot, a width of the rotating sleeve gear is equal to a width of the gear slot, and an outer diameter of the rotating sleeve gear is equal to an outer diameter of the gear rotating sleeve.

A gear profile of the rotating sleeve gear is an involute curve, teeth of the rotating sleeve gear occupy a circumferential angle which is greater than or equal to a circumferential angle corresponding to the first notch, and a number of the teeth of the rotating sleeve gear is greater than or equal to 10.

In an embodiment, a sleeve annular groove is defined between the rotating sleeve gear and the second notch in an axial direction of the rotating sleeve gear, and a first metal seal ring is disposed in the sleeve annular groove.

An outer wall surface of the first metal seal ring is tightly fitted on an inner wall surface of the bypass chamber, and a remaining wall surface of the first metal seal ring is in clearance fit with a wall surface of the sleeve annular groove.

In an embodiment, a bypass end cover is disposed on a tail end of the bypass chamber, and an outside of the another end being closed of the gear rotating sleeve is provided with a hemispherical protrusion.

The hemispherical protrusion is coaxially disposed with the gear rotating sleeve, and a vertex of the hemispherical protrusion is in clearance fit with the bypass end cover.

In an embodiment, an annular chamber partition is disposed between the first annular chamber and the second annular chamber, and the annular chamber partition defines a set of first leaf-shaped through holes disposed evenly along a circumferential direction of the annular chamber partition.

A set of second leaf-shaped through holes are defined at a position of the first annular chamber near the fixed nozzle and disposed evenly along a circumferential direction of the first annular chamber, the set of first leaf-shaped through holes are in one-to-one correspondence with movable nozzle guide vanes of the elastic nozzle mechanism, and the set of second leaf-shaped through holes are in one-to-one correspondence with the movable nozzle guide vanes of the elastic nozzle mechanism.

In an embodiment, the first notch and the second notch each are disposed in a strip-like manner along a circumferential direction of the gear rotating sleeve.

The first notch occupies a circumferential space of 30° to 60° along the circumferential direction of the gear rotating sleeve, the second notch occupies a circumferential space of less than or equal to 20° along the circumferential direction of the gear rotating sleeve, and starting positions of the first notch and the second notch are at a same position along the circumferential direction of the gear rotating sleeve.

In an embodiment, the rack actuator includes: an air intake hose, an air intake port, a pneumatic actuator, and a rack push rod.

A rack portion of the rack push rod is in mesh with a gear portion (i.e., the rotating sleeve gear) of the gear rotating sleeve.

The air intake port is configured to be connected to an air passage of a turbocharger compressor outlet or an air passage of an intercooler outlet through the air intake hose.

In an embodiment, an opening size of the air-bleed hole is 5% to 15% of a width of the second radial channel.

In an embodiment, the fixed nozzle includes: a nozzle bottom plate, and fixed nozzle guide vanes disposed on the nozzle bottom plate. The nozzle bottom plate is press-fitted on a second nozzle wall surface of the turbine casing, and a height of each of the fixed nozzle guide vanes is equal to a nozzle width of the turbine casing.

The elastic nozzle mechanism includes movable nozzle guide vanes, the movable nozzle guide vanes are in one-to-one correspondence with the fixed nozzle guide vanes, and a maximum travelling distance of the movable nozzle guide vanes along the axial direction of the exhaust port is equal to the height of each of the fixed nozzle guide vanes.

In an embodiment, an installation direction of each of the fixed nozzle guide vanes and an installation direction of each of the movable nozzle guide vanes are the same, and a vane installation angle of each of the fixed nozzle guide vanes and the movable nozzle guide vanes is in a range of 65° to 75°.

Each of the fixed nozzle guide vanes and each of the movable nozzle guide vanes have a same vane shape, the fixed nozzle guide vanes and the movable nozzle guide vanes have a same vane number, the vane shape comprises one of an airfoil shape, a dolphin shape, a wedge shape and a strip shape, and the vane number is in a range of 9 to 30.

In an embodiment, the elastic nozzle mechanism includes: a pull rod seat and a spring support structure, and the spring support structure includes: springs and a spring seat.

Each of the movable nozzle guide vanes is connected to a side of the pull rod seat, another side of the pull rod seat is connected to an end of each of the springs, another end of each of the springs is connected to the spring seat, and the spring seat is connected to the turbine casing.

In an embodiment, a radial slit is defined between the spring seat and the exhaust port.

In an embodiment, an outside of the pull rod seat is provided with an outer annular surface, an inside of the pull rod seat is provided with an inner annular surface, the outer annular surface defines a first seal annular groove, the inner annular surface defines a second seal annular groove, a second metal seal ring is disposed in the first seal annular groove, and a third metal seal ring is disposed in the second seal annular groove.

An outside of the second metal seal ring and an outside of the third metal seal ring each are respectively tightened against an inner wall surface and an outer wall surface of the second annular chamber by their own pre-tightening forces, a side wall surface of the second metal seal ring is in clearance fit with a wall surface of the first seal annular groove, and a side wall surface of the third metal seal ring is in clearance fit with a wall surface of the second seal annular groove.

In an embodiment, an inside of the spring seat is provided with at least three cylindrical protrusions evenly disposed along a circumferential direction of the spring seat, the at least three cylindrical protrusions are configured to positionally limit the pull rod seat, and an outer periphery of each of the at least three cylindrical protrusions is sleeved with a corresponding one of the springs.

During the use of the variable geometry turbine device, when the engine operates under a low operating condition, the turbine device requires a relatively small flow capacity to ensure a higher expansion ratio, thereby outputting relatively higher power to drive a compressor to compress fresh air for work and supply sufficient fresh air to the engine. Under this low operating condition, the rack actuator does not operate and is in a minimum displacement state. That is to say, the rack actuator cannot drive the gear rotating sleeve to rotate. The gear rotating sleeve is in a state where a wall surface of the gear rotating sleeve can just seal the first radial channel and the second radial channel, thereby isolating the first annular chamber and the second annular chamber from an interior of the gear rotating sleeve.

Simultaneously, the elastic nozzle mechanism is pressed tightly under the pre-tension of the elastic force, and in contact with and corresponds to the fixed nozzle. At this point, each combined nozzle guide vane with a longer chord length is formed by a movable nozzle guide vane of the elastic nozzle mechanism and a fixed nozzle guide vane of the fixed nozzle. These adjacent combined nozzle guide vanes cause the nozzle throat of the turbine casing to move downstream, reducing a total throat area, which is conducive to establishing a relatively higher expansion ratio under medium and low operating conditions of the engine.

When the engine operates under a medium operating condition, the turbine device needs to moderately increase its flow capacity to prevent exhaust air blockage at higher exhaust flow rates, which could otherwise lead to turbocharger overspeed. At this point, an increase in the engine operating condition results in higher boost pressure, causing the post-compressor or post-intercooler air pressure to rise, thereby causing the rack actuator to move outward. Under the driving of the rack actuator, the gear rotating sleeve rotates, allowing the first notch to start to communicate with the first radial channel. At this point, a portion of the high-temperature, high-pressure air entering from the inlet duct flows into the interior of the gear rotating sleeve and then into the first annular chamber through the communication position between the first notch and the first radial channel, followed by flowing into the exhaust port through the multiple leaf-shaped notches near the fixed nozzle in the first annular chamber.

Since the position of each leaf-shaped notch along the radial direction of the exhaust port is lower than the throat position of the combined nozzle guide vanes, the portion of the airflow does not increase the flow rate at the turbine nozzle, forming a similar "bypass" effect, thereby preventing a rapid increase in turbine inlet pressure due to increased flow rate at the nozzle position. After bypassing the throat of the combined nozzle guide vanes, the portion of high-temperature, high-pressure gas flows out the downstream area of the combined nozzle guide vanes, joins the mainstream fluid, and enters the turbine fluid channel of the turbine casing, thereby driving the turbine to rotate and do work. Therefore, the energy contained in the portion of the airflow can be recovered and utilized by the turbine.

As the engine operating condition is enhanced, the rack actuator undergoes a greater displacement under the influence of the elevated air pressure, which in turn increases the rotation angle of the gear rotating sleeve, resulting in a larger communication area between the first notch and the first radial channel, thereby increasing the fluid that enters the first annular chamber from the inlet duct followed by bypassing through the leaf-shaped notches of the combined nozzle guide vanes.

When the engine operating condition is further elevated, the increase in the flow rate leads to an insufficiency in the bypass capacity of the aforementioned bypass mechanism. At his time, the further increased boost pressure propels the rack actuator to push the gear rotating sleeve into rotation, establishing communication between the second notch and the second radial channel. At this point, a portion of the high-temperature, high-pressure waste gas from the main fluid channel of the turbine device can not only bypass through the first annular chamber but also enter the second annular chamber through the communication area between the second notch and the second radial channel.

Inside the second annular chamber, there is the air-bleed hole that communicates with the exhaust port. The opening size of the air-bleed hole is usually very small. Although the small opening size of the air-bleed hole causes some of the turbine waste gas to directly enter into the post-turbine through the air-bleed hole after entering the second annular chamber, the opening size of the air-bleed hole is much smaller than the communication area between the second notch and the second radial channel, which allows a relatively high pressure to still be established within the second annular chamber.

At this point, under the action of the air pressure difference, the elastic nozzle mechanism produces a displacement that overcomes the pre-tension of the elastic force, causing the entire elastic nozzle mechanism to move along the axial direction of the exhaust port towards an outlet of the exhaust port. In a part of the height of the turbine casing along the axial direction of the exhaust port away from the exhaust port, only the fixed nozzle guide vanes are present. The radial dimension of the fixed nozzle is larger than the radial dimension of the combined nozzle guide vanes, which significantly increases the area of the nozzle throat region in the part of the height of the turbine casing along the axial direction of the exhaust port away from the exhaust port, thereby increasing the turbine flow capacity, while in a part of the height of the turbine casing along the axial direction of the exhaust port close to the exhaust port, the combined nozzle guide vanes still remain.

As the engine operating condition is further enhanced, the rack actuator moves further, making the communication area between the second notch and the second radial channel further increased. The elastic nozzle mechanism moves further towards the exhaust port of the turbine casing, causing the movable nozzle guide vanes to retract further and thereby further increasing the total throat area of the turbine nozzle.

Under the high operating condition of the engine, in addition to regulating the turbine flow by adjusting the elastic nozzle mechanism, the first notch remains in communication with the leaf-shaped notches, allowing a portion of the airflow in the turbine device to still pass from the leaf-shaped notches in the first annular chamber to the downstream area of the turbine nozzle.

When the engine transitions from the high operating condition to a lower operating condition, the rack actuator moves in an opposite direction, making the gear rotating sleeve rotate in an opposite direction. First, the communication area between the second notch and the second radial channel is closed off. The air within the second annular chamber then flows through the air-bleed hole into the exhaust port, causing the pressure inside the second annular chamber to decrease. Simultaneously, the elastic nozzle mechanism, driven by the elastic force, moves in a direction opposite to the exhaust port. The movable nozzle guide vanes progressively extend further into the turbine nozzle fluid channel, thereby reducing the overall flow capacity of the turbine device.

When the elastic nozzle mechanism moves to its maximum position, that is, when the end surface of the elastic nozzle mechanism is in contact with the fixed nozzle, and the engine operating condition further decreases, the gear rotating sleeve further rotates in the opposite direction under the action by the rack actuator, until the communication area between the first notch and the first radial channel is closed, preventing the airflow in the inlet duct from bypassing through the interior of the gear rotating sleeve.

The turbine device achieves the conversion of the actuator reciprocating motion into rotational motion through the cooperation of the rack actuator and the gear rotating sleeve, realizing the movement that the highly complex "four-bar linkage" of traditional variable geometry turbines can accomplish, effectively reducing the number of components, product size and costs, and enhancing the reliability of the turbine device over long-term use. Moreover, the end of the gear rotating sleeve is communicated with the inlet duct, while the another end of the gear rotating sleeve is closed, which helps to avoid throttling losses during device operation.

Furthermore, the turbine device can achieve adjustment of different levels of turbine flow capacities under various engine operating conditions such as the low, medium, and high operating conditions. The turbine device can efficiently guide airflow both before and after the elastic nozzle mechanism is retracted, solving the problem of significant reduction in turbine efficiency caused by the small nozzle opening angle at low-speed operating conditions and the large nozzle opening angle at high engine operating conditions in traditional variable-angle turbines.

In summary, the variable geometry turbine device provided by the invention is a highly reliable and efficient turbine device across the entire operating range. In other words, the variable geometry turbine device can achieve different degrees of turbine flow capacity adjustment under different engine operating conditions-low, medium, and high. The variable geometry turbine device can efficiently guide airflow both before and after the elastic nozzle mechanism is removed, thus solving the problem of significant reduction in turbine efficiency caused by the small nozzle opening angle at low-speed operating conditions and the large nozzle opening angle at high engine operating conditions in traditional variable-angle turbines.

### BRIEF DESCRIPTION OF DRAWINGS

In order to provide a clearer explanation of technical solutions in embodiments of the invention or in the related art, a brief introduction is provided to the accompanying drawings required for the description of the embodiments of the invention or the related art. It is apparent that the accompanying drawings described below are only some embodiments of the invention. For those skilled in the art, other drawings can be obtained based on the provided drawings without creative labor.
FIG. 1 illustrates a schematic structural diagram of a variable geometry turbine device in a first state according to an embodiment of the invention.
FIG. 2 illustrates a partial enlarged view of an area A illustrated in FIG. 1.
FIG. 3 illustrates a half-sectional view of a turbine casing.
FIG. 4 illustrates a partial enlarged view of an area B illustrated in FIG. 3.
FIG. 5 illustrates a partial enlarged view of an area C illustrated in FIG. 3.
FIG. 6 illustrates a schematic structural diagram of a gear rotating sleeve.
FIG. 7 illustrates a schematic assembly diagram of the gear rotating sleeve and a rack actuator.
FIG. 8 illustrates a cutaway view of the gear rotating sleeve and the rack actuator.
FIG. 9 illustrates a schematic structural diagram of the turbine casing.
FIG. 10 illustrates a schematic structural diagram of a fixed nozzle.
FIG. 11 illustrates a schematic structural diagram of an elastic nozzle mechanism.
FIG. 12 illustrates a schematic structural diagram of a pull rod seat.
FIG. 13 illustrates a schematic structural diagram of a spring support structure.
FIG. 14 illustrates an axial sectional view of the variable geometry turbine device in the first state.
FIG. 15 illustrates a partial enlarged view of an area D illustrated in FIG. 14.
FIG. 16 illustrates a radial sectional view of the variable geometry turbine device in a second state.
FIG. 17 illustrates a partial enlarged view of an area E illustrated in FIG. 16.
FIG. 18 illustrates an axial sectional view of the variable geometry turbine device in the second state.
FIG. 19 illustrates a partial enlarged view of an area F illustrated in FIG. 18.
FIG. 20 illustrates a radial sectional view of the variable geometry turbine device in a third state.
FIG. 21 illustrates a partial enlarged view of an area G illustrated in FIG. 20.
FIG. 22 illustrates an axial sectional view of the variable geometry turbine device in the third state.
FIG. 23 illustrates a partial enlarged view of an area H illustrated in FIG. 22.

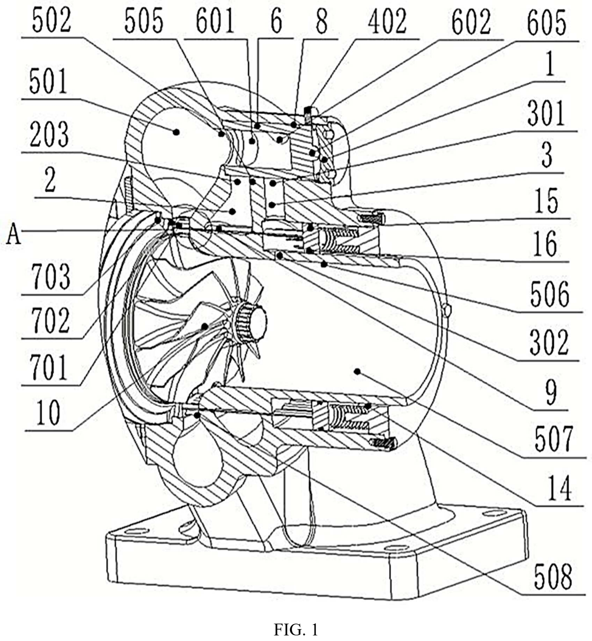

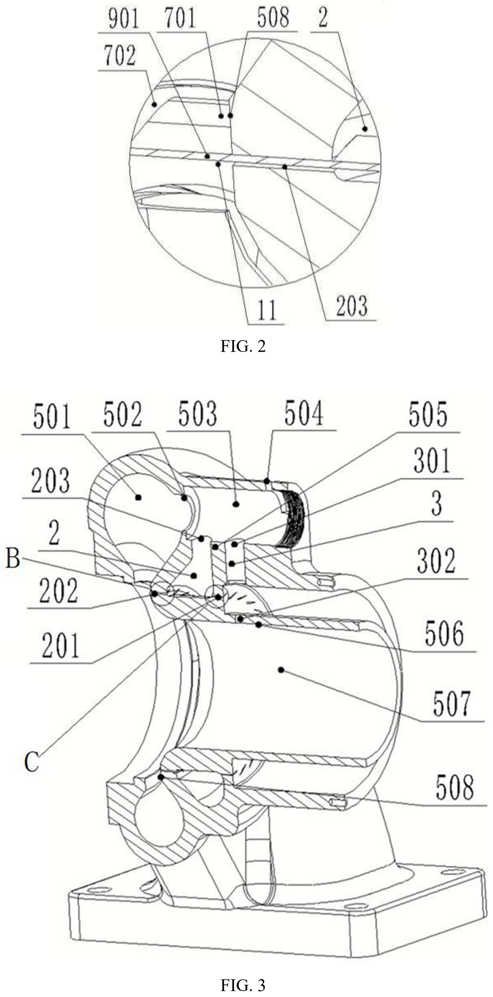

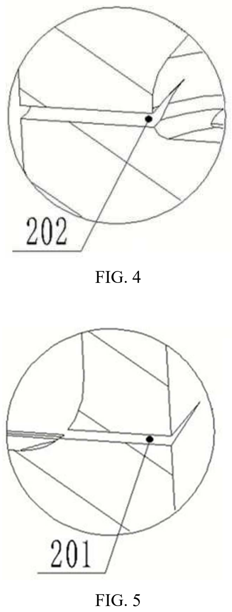

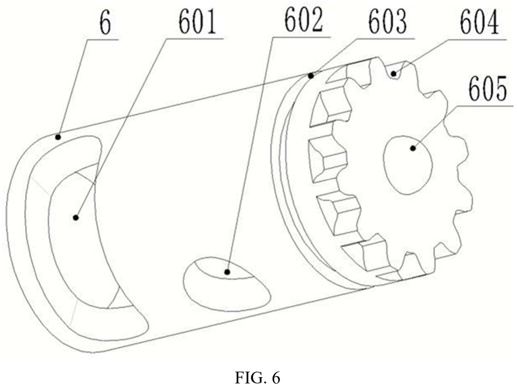

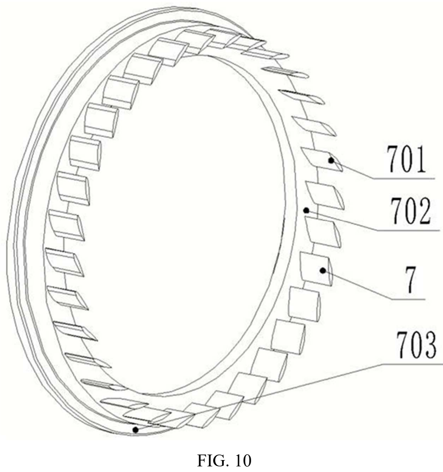

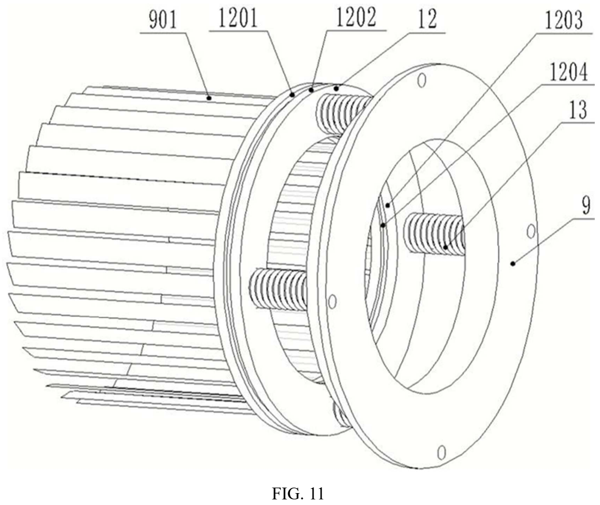

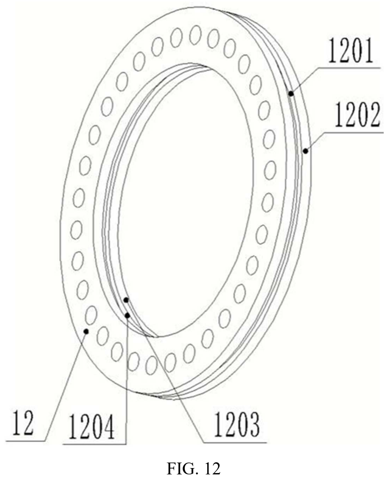

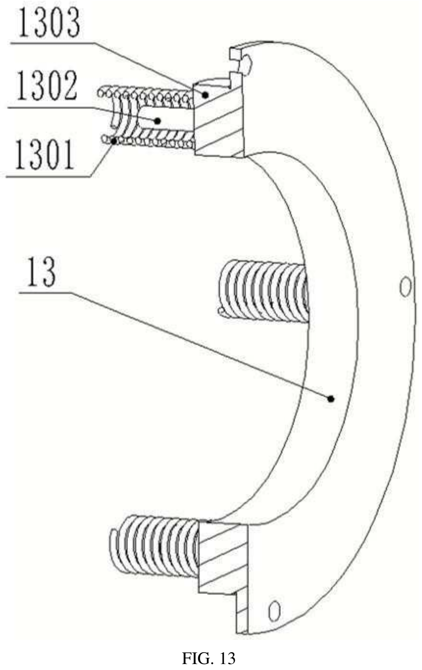

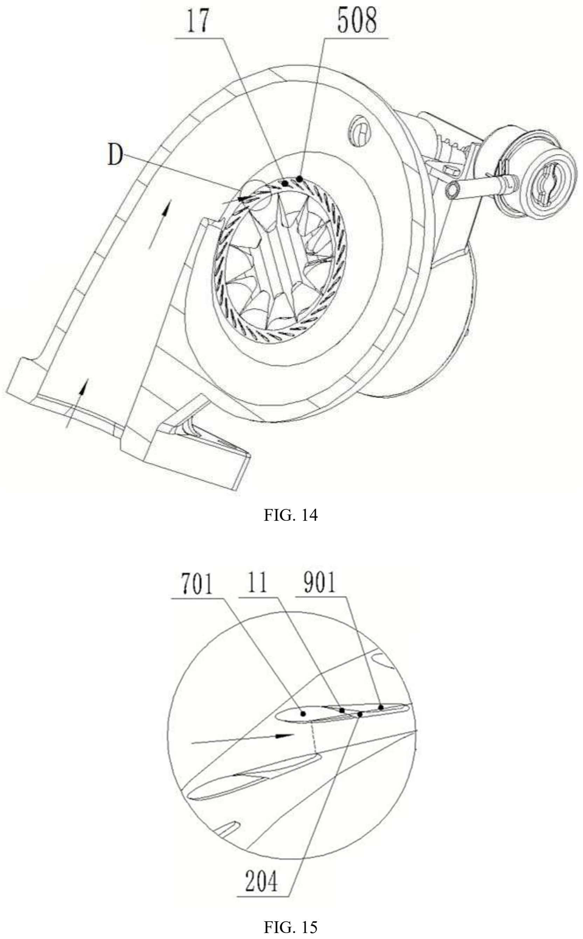

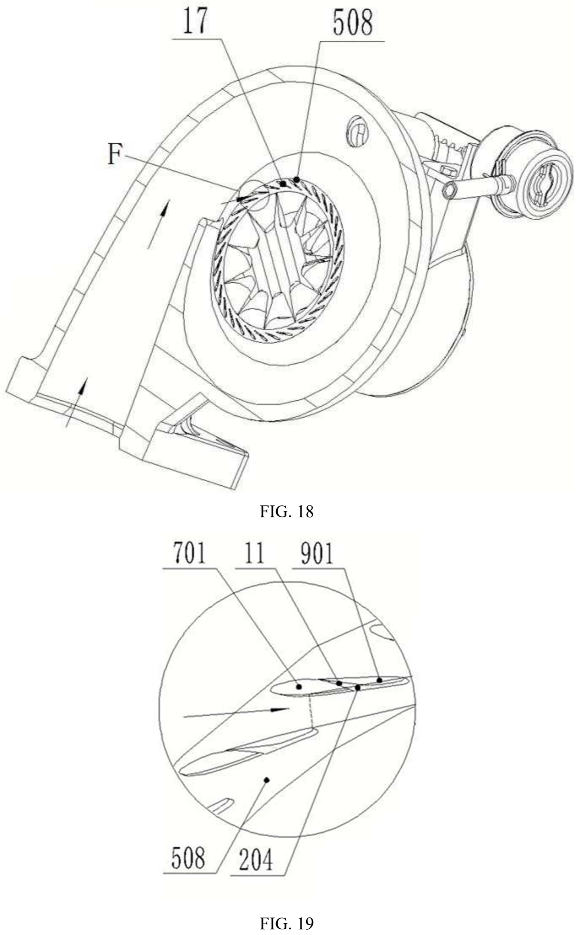

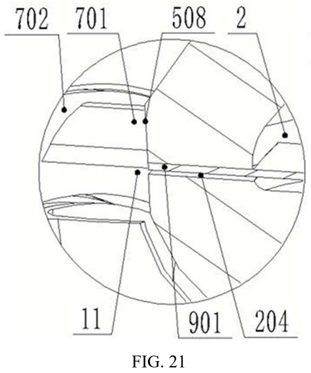

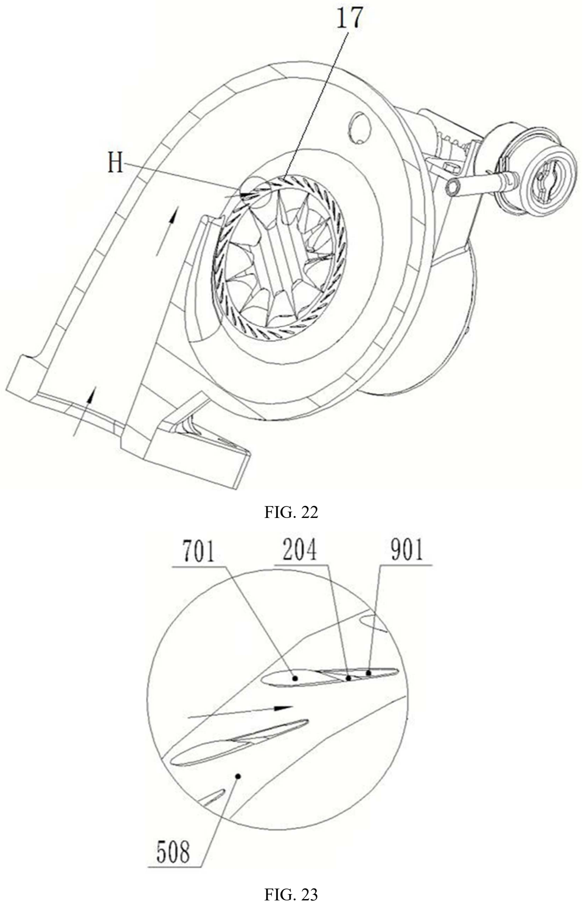

Description of reference numerals in FIGS. 1-23: 1: bypass end cover; 2: first annular chamber; 201: first leaf-shaped through hole; 202: second leaf-shaped through hole; 203: first radial channel; 204: leaf-shaped notch; 3: second annular chamber; 301: second radial channel; 302: air-bleed hole; 4: rack actuator; 401: air intake hose; 402: air intake port; 403: pneumatic actuator; 404: rack push rod; 5: turbine casing; 501: inlet duct; 502: bypass opening; 503: bypass chamber; 504: gear slot; 505: annular chamber partition; 506: exhaust duct; 507: exhaust port; 508: first nozzle wall surface; 6: gear rotating sleeve; 601: first notch; 602: second notch; 603: sleeve annular groove; 604: rotating sleeve gear ; 605: hemispherical protrusion; 7: fixed nozzle; 701: fixed nozzle guide vane; 702: second nozzle wall surface; 703: nozzle bottom plate; 8: first metal seal ring; 9: elastic nozzle mechanism; 901: movable nozzle guide vane; 10: turbine; 11: combined nozzle notch; 12: pull rod seat; 1201: outer annular surface; 1202: first seal annular groove; 1203: inner annular surface; 1204: second seal annular groove; 13: spring support structure; 1301: spring; 1302: cylindrical protrusion; 1303: spring seat; 14: radial slit; 15: third metal seal ring; 16: second metal seal ring; 17: combined nozzle guide vane.

### DETAILED DESCRIPTION OF EMBODIMENTS

Technical solutions in embodiments of the invention will be clearly and completely described/illustrated below in conjunction with the accompanying drawings. Apparently, the illustrated embodiments are only some embodiments of the invention, not all embodiments of the invention. Based on the illustrated embodiments of the invention, all other embodiments obtained by those skilled in the art without creative labor are within the scope of protection of the invention.

A core of the invention is to provide a variable geometry turbine (VGT) device, which is a highly reliable turbine device that operates efficiently across an entire operating range. Specifically, the variable geometry turbine device can achieve different degrees of turbine flow capacity adjustment under different engine operating conditions such as low, medium, and high engine operating conditions, and can efficiently guide airflow both before and after an elastic nozzle mechanism is removed, thereby solving the problem of significant reduction in turbine efficiency caused by an excessively small nozzle opening angle at a low-speed operating condition and an excessively large nozzle opening angle at a high engine operating condition in traditional variable-angle turbines.

Referring to FIG. 1 to FIG. 23, an embodiment of the invention provides a variable geometry turbine device. The variable geometry turbine device includes: a turbine casing 5, a gear rotating sleeve 6, a rack actuator 4, combined nozzle guide vanes 17, and a turbine 10.

The turbine casing 5 is provided with an inlet duct 501, and defines an exhaust port 507 and a bypass chamber 503 therein. The exhaust port 507 and the bypass chamber 503 are disposed in parallel, and both are in communication with the inlet duct 501. A first annular chamber 2 and a second annular chamber 3 are in communication with each other and are defined between the exhaust port 507 and the bypass chamber 503. A first radial channel 203 and a second radial channel 301 are formed just below the bypass chamber 503 and arranged along an axial direction of the bypass chamber 503, the first radial channel 203 is in communication with the first annular chamber 2, the second radial channel 301 is in communication with the second annular chamber 3, and a wall surface of the second annular chamber 3 internally communicated with the exhaust port 507 defines an air-bleed hole 302.

The gear rotating sleeve 6 is disposed inside the bypass chamber 503. An end of the gear rotating sleeve 6 defines an opening in communication with the inlet duct 501, and another end of the gear rotating sleeve 6 is closed. A side of the gear rotating sleeve 6 defines a first notch 601 configured to be selectively connected and disconnected to the first radial channel 203, and a second notch 602 configured to be selectively connected and disconnected to the second radial channel 301. Opening and closing of the first radial channel 203 and the second radial channel 301 have a time difference.

The rack actuator 4 is connected to the another end, i.e., the closed end, of the gear rotating sleeve 6 and configured to drive the gear rotating sleeve 6 to rotate circumferentially.

The combined nozzle guide vanes 17 include: a fixed nozzle 7 fixedly disposed on a first nozzle wall surface 508 of the turbine casing 5, and an elastic nozzle mechanism 9. The elastic nozzle mechanism 9 is configured to move reciprocally along an axial direction of the exhaust port 507 under a cooperative action of a pressure difference and an elastic force, leaf-shaped notches 204 are defined between the elastic nozzle mechanism 9 and the fixed nozzle 7, and a position of each of the leaf-shaped notches 204 along the axial direction of the exhaust port 507 is lower than a throat position of the combined nozzle guide vanes 17.

The turbine 10 is disposed inside the turbine casing 5, and a rotating shaft of the turbine 10 is coaxially disposed with the exhaust port 507.

It should be noted that, the bypass chamber 503 is defined on a side wall surface of the inlet duct 501 of the turbine casing 5, and the bypass chamber 503 is cylindrical. A bypass end cover 1 is disposed on a tail end of the bypass chamber 503, and the bypass end cover 1 is assembled onto an end surface of the bypass chamber 503 through a press-fit process. Two radial channels are defined just below the bypass chamber 503 along the axial direction of the bypass chamber 503. The first radial channel 203 near the inlet duct 501 of the turbine casing 5 is in communication with the first annular chamber 2 inside the turbine casing 5. The second radial channel 301 near an exhaust flange of the turbine casing 5 is in communication with the second annular chamber 3 inside the turbine casing 5.

It should be noted that, the end of the gear rotating sleeve 6 is opened, and the another end of the gear rotating sleeve 6 is closed. The gear rotating sleeve 6 is disposed inside a cavity formed by the bypass chamber 503 and the bypass end cover 1. An inner wall of the gear rotating sleeve 6 defines two notches including the first notch 601 and the second notch 602 along the axial direction of the gear rotating sleeve 6. The widths and axial positions of the first notch 601 and the second notch 602 are same as the widths and axial positions of the first radial channel 203 and the second radial channel 301 respectively.

In practical application, the shapes, structures, sizes, materials, and positions, etc. of the turbine casing 5, the gear rotating sleeve 6, the rack actuator 4, the combined nozzle guide vanes 17, and the turbine 10 can be determined according to actual situations and needs.

In an embodiment, a bypass opening 502 of the bypass chamber 503 connected to the inlet duct 501 has a circular shape. A center of the bypass opening 502 is coaxially disposed with an axis of the bypass chamber 503. A thickness of a wall of the bypass opening 502 is greater than or equal to 3 mm, and a diameter of the bypass opening 502 is at least 3 mm less than a diameter of the bypass chamber 503. The advantage of designing the bypass opening 502 in this way is that it facilitates the manufacturing process, and a stepped structure can be formed. When the gear rotating sleeve 6 is placed into the bypass chamber 503, the end of the gear rotating sleeve 6 can be effectively limited by the stepped structure, thereby preventing the gear rotating sleeve 6 from easily disengaging from the bypass chamber 503.

In an embodiment, a gear slot 504 is defined on the bypass chamber 503, the gear rotating sleeve 6 is provided with a rotating sleeve gear 604 at a position corresponding to the gear slot 504, a width of the rotating sleeve gear 604 is equal to a width of the gear slot 504, and an outer diameter of the rotating sleeve gear 604 is equal to an outer diameter of the gear rotating sleeve 6.

A gear profile of the rotating sleeve gear 604 is an involute curve, teeth of the rotating sleeve gear 604 occupy a circumferential angle which is greater than or equal to a circumferential angle corresponding to the first notch 601, and a number of the teeth of the rotating sleeve gear 604 is greater than or equal to 10. The rotating sleeve gear 604 can be provided with full teeth or with multiple teeth spaced at intervals. By specifying the circumferential angle and the number of the teeth for the rotating sleeve gear 604, it is ensured that the first notch 601 can be fully opened when rotating the gear rotating sleeve 6, and the adjustment accuracy of the gear rotating sleeve 6 can be guaranteed.

It should be further noted that, a gear slot 504 can be defined just above the bypass chamber 503. The surface in which the gear slot 504 lies is perpendicular to an inlet flange surface of the turbine casing 5. A width of the gear slot 504 is in a range of 4-10 mm, and a depth of the gear slot 504 is 20%-50% of the inner diameter of the bypass chamber 503, thus facilitating the machining of the device without adversely affecting other components.

In an embodiment, a sleeve annular groove 603 is defined between the rotating sleeve gear 604 and the second notch 602 in an axial direction of the rotating sleeve gear 604, and a first metal seal ring 8 is disposed in the sleeve annular groove 603. An outer wall surface of the first metal seal ring 8 is tightly fitted on an inner wall surface of the bypass chamber 503, and a remaining wall surface of the first metal seal ring 8 is in clearance fit with a wall surface of the sleeve annular groove 603. That is, the first metal seal ring 8 can be rotated in the sleeve annular groove 603, and is in sealing connection with the inner wall of the bypass chamber 503.

In an embodiment, the bypass end cover 1 is disposed on the tail end of the bypass chamber 503, and an outside of the another end of the gear rotating sleeve 6 is provided with a hemispherical protrusion 605. The hemispherical protrusion 605 is coaxially disposed with the gear rotating sleeve 6, and a vertex of the hemispherical protrusion 605 is in clearance fit with the bypass end cover 1. By setting the hemispherical protrusion 605 coaxially disposed with the gear rotating sleeve 6, the gear rotating sleeve 6 has a fulcrum for rotation, making the rotation of the gear rotating sleeve 6 smoother.

In an embodiment, an annular chamber partition 505 is disposed between the first annular chamber 2 and the second annular chamber 3, and the annular chamber partition 505 defines a set of first leaf-shaped through holes 201 disposed evenly along a circumferential direction of the annular chamber partition 505. A set of second leaf-shaped through holes 202 are defined at a position of the first annular chamber 2 near the fixed nozzle 7 and disposed evenly along a circumferential direction of the first annular chamber 2, the set of first leaf-shaped through holes 201 are in one-to-one correspondence with movable nozzle guide vanes 901 of the elastic nozzle mechanism 9, and the set of second leaf-shaped through holes 202 are in one-to-one correspondence with movable nozzle guide vanes 901 of the elastic nozzle mechanism 9.

It should be noted that, apart from containing the first radial channel 203 and the second radial channel 301, the space of each of the first annular chamber 2 and the second annular chamber 3 is circumferentially symmetrical. Moreover, the thickness of the annular chamber partition 505 between the first annular chamber 2 and the second annular chamber 3 is not less than 4 mm. When the movable nozzle guide vanes 901 of the elastic nozzle mechanism 9 move along the axial direction of the exhaust port 507 under the cooperative action of the elastic force and the pressure difference, the movable nozzle guide vanes 901 can pass through the first leaf-shaped through holes 201 and the second leaf-shaped through holes 202, avoiding any obstruction to the movement of the movable nozzle guide vanes 901.

It should be further noted that, the movable nozzle guide vanes 901 of the elastic nozzle mechanism 9 pass through the first leaf-shaped through holes 201 and the second leaf-shaped through holes 202, individually. Fixed nozzle guide vanes 701 and parts of the movable nozzle guide vanes 901 that pass through the second leaf-shaped through holes 202 together form the combined nozzle guide vanes 17 respectively. Each of the second leaf-shaped through holes 202 has an additional area compared to the cross-section of each of the movable nozzle guide vanes 901. When a movable nozzle guide vane 901 passes through a second leaf-shaped through holes 202, a slit is exposed, which is a combined nozzle notch 11.

In an embodiment, the first notch 601 and the second notch 602 each are disposed in a strip-like manner along a circumferential direction of the gear rotating sleeve 6. The first notch 601 occupies a circumferential space of 30° to 60° along the circumferential direction of the gear rotating sleeve 6, the second notch 602 occupies a circumferential space of less than or equal to 20° along the circumferential direction of the gear rotating sleeve 6, and starting positions of the first notch 601 and the second notch 602 are at a same position along the circumferential direction of the gear rotating sleeve 6.

It should be noted that, the rotating sleeve gear 604 can be provided on the gear rotating sleeve 6 at a position corresponding to the gear slot 504 which is just above the bypass chamber 503. Moreover, two notches of different sizes can be defined on the inner wall of the gear rotating sleeve 6, and each of the two notches has a strip-like shape. Specifically, the first notch 601 corresponding to the first radial channel 203 occupies the circumferential space of 30° to 60° along the circumferential direction of the gear rotating sleeve 6, and the second notch 602 corresponding to the second radial channel 301 occupies the circumferential space of no greater than 20° along the circumferential direction of the gear rotating sleeve 6. The starting positions of the first notch 601 and the second notch 602 are at the same position along the circumferential direction of the gear rotating sleeve 6.

When the gear rotating sleeve 6 is initially assembled, it should be ensured that a wall surface of the gear rotating sleeve 6 can seal the first annular chamber 2 and the second annular chamber 3. When the gear rotating sleeve 6 is rotated by the push action of the rack actuator 4, the first notch 601 can just be in communication with the first radial channel 203; and when the gear rotating sleeve 6 is further rotated by 10°-30° by the rack actuator 4, the second notch 602 can just be in communication with the second radial channel 301. Therefore, the opening and closing of the first radial channel 203 and the second radial channel 301 have the time difference.

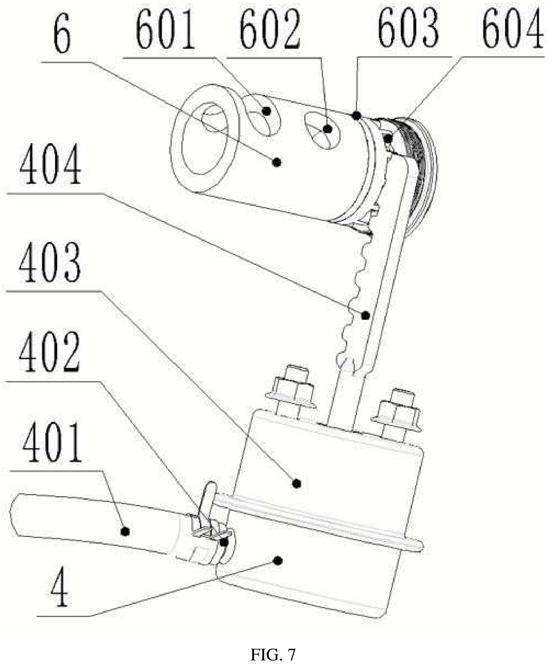

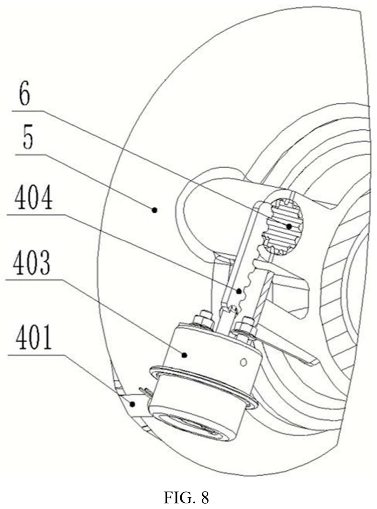

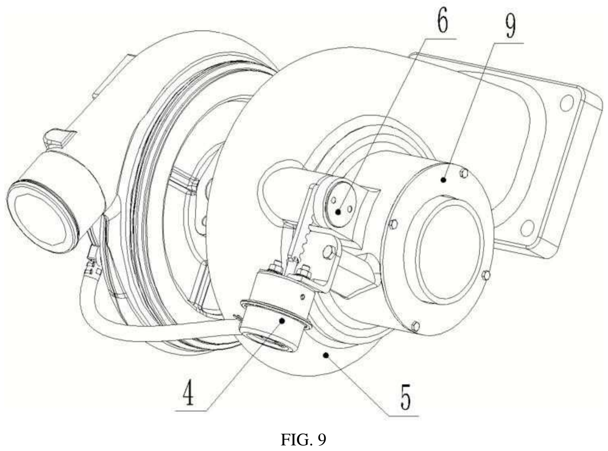

In an embodiment, the rack actuator 4 includes: an air intake hose 401, an air intake port 402, a pneumatic actuator 403, and a rack push rod 404. A rack portion of the rack push rod 404 is in mesh with a gear portion of the gear rotating sleeve 6. The air intake port 402 is connected to an air passage of a turbocharger compressor outlet or an air passage of an intercooler outlet through the air intake hose 401. The structure of the rack actuator 4 is shown in FIG. 7. The radial deflection of the rack push rod 404 is limited by an opening size of the pneumatic actuator 403. As shown in FIG. 8, the rack portion of the rack push rod 404 is in mesh with the gear portion of the gear rotating sleeve 6, thus converting the axial movement of the rack push rod 404 into the rotational motion of the gear rotating sleeve 6. As shown in FIG. 9, the air intake port 402 is connected to the air passage of the turbocharger compressor outlet or the air passage of the intercooler outlet through the air intake hose 401.

In an embodiment, an opening size of the air-bleed hole 302 is 5% to 15% of a width of the second radial channel 301.

It should be noted that, the turbine 10 can be a radial flow turbine or a mixed-flow turbine. Moreover, the air-bleed hole 302 can be defined at any position close to the annular chamber partition 505 within the second annular chamber 3 in a circumferential direction of the second annular chamber 3. The air-bleed hole 302 is configured to communicates the second annular chamber 3 and the exhaust port 507. The opening size of the air-bleed hole 302 is 5% to 15% of the width of the second radial channel 301, thereby preventing the air-bleed hole 302 from being too small, which would make it difficult to release gas, and preventing the air-bleed hole 302 from being too large, which would make it difficult to establish high pressure within the second annular chamber 3.

In an embodiment, the fixed nozzle 7 includes: a nozzle bottom plate 703, and fixed nozzle guide vanes 701 disposed on the nozzle bottom plate 703. The nozzle bottom plate 703 is press-fitted on a second nozzle wall surface 702 of the turbine casing 5, and a height of each of the fixed nozzle guide vanes 701 is equal to a nozzle width of the turbine casing 5.

The elastic nozzle mechanism 9 includes movable nozzle guide vanes 901, the movable nozzle guide vanes 901 are in one-to-one correspondence with the fixed nozzle guide vanes 701, and a maximum travelling distance of the movable nozzle guide vanes 901 along the axial direction of the exhaust port 507 equals the height of each of the fixed nozzle guide vanes 701.

It should be noted that, the fixed nozzle guide vanes 701 and the nozzle bottom plate 703 can be integrally machined or cast, or can be connected by welding. The height of each of the fixed nozzle guide vanes 701 is equal to the nozzle width of the turbine casing 5. The fixed nozzle guide vanes 701 are fixed on the second nozzle wall surface 702 by a press plate method. The movable nozzle guide vanes 901 are in one-to-one correspondence with the fixed nozzle guide vanes 701, when the movable nozzle guide vanes 901 are moved, the shape and size of each of the combined nozzle guide vanes 17 are adjusted to change the flow rate within the nozzle fluid channel.

The maximum movement distance of the movable nozzle guide vanes 901 along the axial direction of the exhaust port 507 being the height of each of the fixed nozzle guide vanes 701 means that when the movable nozzle guide vanes 901 move to the maximum movement distance, the movable nozzle guide vanes 901 can just exit the nozzle fluid channel. If the exit distance of the movable nozzle guide vanes 901 is insufficient, it can lead to a longer vane length, smaller notch area, and smaller flow area for the combined nozzle guide vanes 17, i.e., the combined nozzle guide vanes 17 have a shorter vane length, a larger notch area, and a larger flow area. When the movable nozzle guide vanes 901 just exit the nozzle fluid channel, the nozzle at this time consists only of the fixed nozzle guide vanes 701, which can achieve the maximum adjustable flow rate.

In an embodiment, an installation direction of each of the fixed nozzle guide vanes 701 and an installation direction of each of the movable nozzle guide vanes 901 are the same, and a vane installation angle of each of the fixed nozzle guide vanes 701 and the movable nozzle guide vanes 901 is in a range of 65° to 75°, i.e., the vane installation angle corresponding to the outline of the combined nozzle guide vanes 17 is in a range of 65° - 75°. The vane installation angle, also known as a pitch angle, is an angle between a vane chord length and the axis of the engine, and is also an angle between a rotational plane at a vane radius and a chord length of the vane surface.

Each of the fixed nozzle guide vanes 701 and each of the movable nozzle guide vanes 901 have a same vane shape, the fixed nozzle guide vanes 701 and the movable nozzle guide vanes 901 have a same vane number, the vane shape includes an airfoil shape, a dolphin shape, a wedge shape, or a strip shape, and the vane number is in a range of 9 to 30. That is, the fixed nozzle guide vanes 701 and the movable nozzle guide vanes 901 are in one-to-one correspondence, and together form the combined nozzle guide vanes 17, and the outlines of the combined nozzle guide vanes 17 can still form streamlined shapes such as the airfoil shape, the dolphin shape, the wedge shape, and the strip shape.

Moreover, a leaf-shaped notch 204 is defined between each fixed nozzle guide vane 701 and a corresponding movable nozzle guide vane 901, the leaf-shaped notch 204 has a wedge shape, a maximum notch width of the leaf-shaped notch 204 is 3 mm, and the position of the leaf-shaped notch 204 along the radial direction of the exhaust port 507 is lower than the throat position of the combined nozzle guide vanes 17.

In an embodiment, the elastic nozzle mechanism 9 includes: a pull rod seat 12 and a spring support structure 13, and the spring support structure 13 includes: springs 1301 and a spring seat 1303.

Each movable nozzle guide vane 901 is connected to a side of the pull rod seat 12, another side of the pull rod seat 12 is connected to an end of each of the springs 1301, another end of each of the springs 1301 is connected to the spring seat 1303, and the spring seat 1303 is connected to the turbine casing 5.

It should be noted that, each movable nozzle guide vane 901 can be connected to the side of the pull rod seat 12 by riveting. The another side of the pull rod seat 12 is provided with the spring support structure 13. The another end of each spring 1301 of the spring support structure 13 is fixedly connected to the spring seat 1303, and the end of each spring 1301 is in contact with the pull rod seat 12. The spring seat 1303 is connected to the turbine casing 5 by screws or rivets.

In an embodiment, a radial slit 14 is defined between the spring seat 1303 and the exhaust port 507.

It should be noted that, the exhaust port 507 is a cylindrical passage, and an outer wall of the exhaust port 507 is the exhaust duct 506. A radial slit 14 can be defined between the spring seat 1303 and the exhaust duct 506 of the turbine device. The radial slit 14 is configured to balance the pressure in the second annular chamber 3 to facilitate the movement of the pull rod seat 12, i.e., the radial slit 14 serves as a communication port between the second annular chamber 3 and the outside. Without the radial slit 14, the pressure in the sealed space of the second annular chamber 3 would be high, making it difficult for the spring seat 1303 to move.

In an embodiment, an outside of the pull rod seat 12 is provided with an outer annular surface 1201, an inside of the pull rod seat 12 is provided with an inner annular surface 1203, the outer annular surface 1201 defines a first seal annular groove 1202, the inner annular surface 1203 defines a second seal annular groove 1204, a second metal seal ring 16 is disposed in the first seal annular groove 1202, and a third metal seal ring 15 is disposed in the second seal annular groove 1204.

An outside of the second metal seal ring 16 and an outside of the third metal seal ring 15 each are respectively tightened against an inner wall surface and an outer wall surface of the second annular chamber 3 by their own pre-tightening forces, a side wall surface of the second metal seal ring 16 is in clearance fit with a wall surface of the first seal annular groove 1202, and a side wall surface of the third metal seal ring 15 is in clearance fit with a wall surface of the second seal annular groove 1204. Therefore, the movement of the pull rod seat 12 will not cause fluid leakage, and will not be hindered.

In an embodiment, an inside of the spring seat 1303 is provided with at least three cylindrical protrusions 1302 evenly disposed along a circumferential direction of the spring seat 1303, the at least three cylindrical protrusions 1302 are configured to positionally limit the pull rod seat 12, and an outer periphery of each of the at least three cylindrical protrusions 1302 is sleeved with a corresponding one of the springs 1301. That is to say, in the initial state, the springs 1301 are pre-compressed properly, making the end face of the movable nozzle guide vanes 901 tightly contact the nozzle bottom plate 703. A number of the springs 1301 is equal to a number of the cylindrical protrusions 1302, and the springs 1301 and the cylindrical protrusions 1302 are arranged in a sleeve-like manner, ensuring stable movement of the movable nozzle guide vanes 901.

The main feature of the variable geometry turbine device includes: the combined nozzle guide vanes 17, which are formed by the fixed nozzle guide vanes 701 and the movable nozzle guide vanes 901; and the leaf-shaped notches 204 formed by the movable nozzle guide vanes 901 and the second leaf-shaped through holes 202. An actuator with short stroke and precision-adjustable turbine flow capacity is proposed. The fixed nozzle guide vanes 701, the movable nozzle guide vanes 901, and the combined nozzle guide vanes 17 can all be designed with optimal installation angles and streamlined shapes such as the airfoil, dolphin, wedge, or strip shapes. Under different engine operating conditions, different structural forms are realized to meet the demand for efficient full-range matching.

To further illustrate the using method of the variable geometry turbine device provided by the invention, an example is given below.

During the use of the variable geometry turbine device, when the engine operates under a low operating condition, the turbine device requires a relatively small flow capacity to ensure a higher expansion ratio, thereby outputting relatively higher power to drive the compressor to compress fresh air for work and supply sufficient fresh air to the engine. This operating condition is referred to as a first state of the variable geometry turbine device, as shown in FIGS. 1-14. Under a lower charge air pressure, the rack actuator 4 is not sufficient to overcome the pre-tension of the spring inside the pneumatic actuator 403, making the rack push rod 404 in a minimum displacement state. The gear rotating sleeve 6, which is in mesh with the rack portion of the rack push rod 404, is in a position where the wall surface of the gear rotating sleeve 6 can just seal the first radial channel 203 and the second radial channel 301, thereby isolating the first annular chamber 2 and the second annular chamber 3 from the interior of the gear rotating sleeve 6.

At this time, the elastic nozzle mechanism 9 is pressed tightly under the pre-tension of the springs 1301, with the end surfaces of the movable nozzle guide vanes 901 in contact with the nozzle bottom plate 703 of the fixed nozzle 7. At this moment, each combined nozzle guide vane 17 formed by the movable nozzle guide vane 901 and the fixed nozzle guide vane 701 can form a "streamlined" vane with a longer chord length. These adjacent "streamlined" combined nozzle guide vanes 17 cause the nozzle throat of the turbine casing 5 to move downstream, reducing a total throat area, which is conducive to establishing a relatively higher expansion ratio under medium and low operating conditions of the engine.

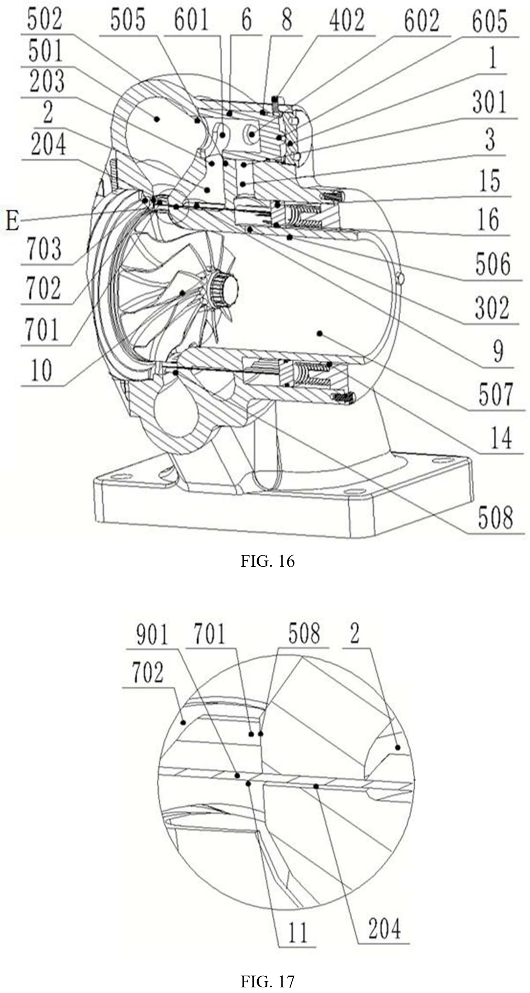

When the engine operates under a medium operating condition, the turbine device needs to moderately increase its flow capacity to prevent exhaust air blockage at higher exhaust flow rates, which could otherwise lead to turbocharger overspeed. As shown in FIGS. 16-19, an increase in the engine operating condition results in higher boost pressure, causing the post-compressor or post-intercooler air pressure to rise, thereby increasing the pressure within the chamber of the pneumatic actuator 403, which overcomes the pre-tension of the internal spring to some extent, causing the rack push rod 404 to move outward. This state can be referred to as a second state of the variable geometry turbine device.

Under the meshing action between the rack push rod 404 and the gear portion on the gear rotating sleeve 6, the gear rotating sleeve 6 rotates, allowing the first notch 601 to start to communicate with the first radial channel 203. At this point, a portion of the high-temperature, high-pressure air entering from the inlet duct 501 flows into the interior of the gear rotating sleeve 6 and then into the first annular chamber 2 through the communication position between the first notch 601 and the first radial channel 203, followed by flowing into the combined nozzle notches 11 through the multiple leaf-shaped notches 204 near the fixed nozzle 7 in the first annular chamber 2.

Since the positions of the leaf-shaped notches 204 and the combined nozzle notches 11 along the radial direction of the exhaust port 507 are lower than the throat position of the combined nozzle guide vanes 17, the portion of the airflow does not increase the flow rate at the turbine nozzle, forming a similar "bypass" effect, thereby preventing a rapid increase in turbine inlet pressure due to increased flow rate at the nozzle position. After bypassing the throat of the combined nozzle guide vanes 17, this high-temperature, high-pressure gas joins the mainstream fluid and enters the turbine fluid channel of the turbine casing 5, driving the turbine 10 to rotate and do work. Therefore, the energy contained in the portion of the airflow can be recovered and utilized by the turbine 10.

As the engine operating condition is enhanced, the rack push rod 404 undergoes a greater displacement under the influence of the elevated air pressure, which in turn increases the rotation angle of the gear rotating sleeve 6, resulting in a larger communication area between the first notch 601 and the first radial channel 203, thereby increasing the fluid that enters the first annular chamber 2 from the inlet duct 501 followed by bypassing through the leaf-shaped notches 204 of the combined nozzle guide vanes 17.

When the engine operating condition is further elevated, the increase in the flow rate leads to an insufficiency in the bypass capacity of the aforementioned bypass mechanism. Consequently, the further increased boost pressure propels the rack push rod 404 to push the gear rotating sleeve 6 into rotation, establishing communication between the second notch 602 and the second radial channel 301.

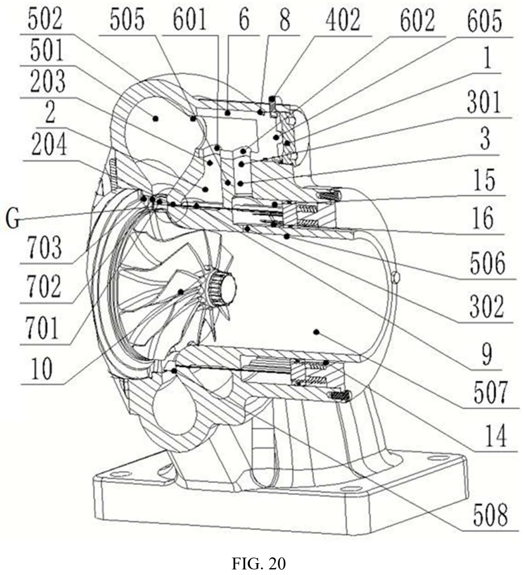

As shown in FIGS. 20-23, at this point, a portion of the high-temperature, high-pressure waste gas from the inlet duct 501 of the turbine casing 5 can not only bypass through the first annular chamber 2 but also enter the second annular chamber 3 through the communication area between the second notch 602 and the second radial channel 301. This can be referred to as a third state of the variable geometry turbine device.

Inside the second annular chamber 3, there is the air-bleed hole 302 that connects to the exhaust port 507. The opening size of the air-bleed hole 302 is usually very small. Although the small opening size of the air-bleed hole 302 causes some of the turbine waste air to directly enter into the post-turbine (also referred to as turbine exit/outlet/downstream) through the air-bleed hole 302 after entering the second annular chamber 3, the opening size of the air-bleed hole 302 is much smaller than the communication area between the second notch 602 and the second radial channel 301, which allows a relatively high pressure to still be established within the second annular chamber 3.

At this point, the surface of the pull rod seat 12 located in the second annular chamber 3 is in contact with the air entering the second annular chamber 3. Another end wall of the pull rod seat 12 is connected to the lower-pressure atmosphere through the radial slit 14. Under the action of the air pressure difference, the pull rod seat 12 produces a displacement that overcomes the pre-tension of the springs 1301, causing the entire elastic nozzle mechanism 9 to move along the axial direction of the exhaust port 507 towards an outlet of the exhaust port 507 of the turbine casing 5, thereby making the movable nozzle guide vanes 901 translate. As a result, in a part of the height of the turbine device along the axial direction of the exhaust port 507 away from the exhaust port 507 of the turbine casing 5, only the fixed nozzle guide vanes 701 are present. The radial dimension of the fixed nozzle 7 is larger than the radial dimension of the combined nozzle guide vanes 17, which significantly increases the area of the nozzle throat region in the part of the height of the turbine device along the axial direction of the exhaust port 507 of the turbine casing 5 away from the exhaust port 507, thereby increasing the turbine flow capacity, while in a part of the height of the turbine device along the axial direction of the exhaust port 507 of the turbine casing 5 close to the exhaust port 507, the combined nozzle guide vanes 17 still remain.

As the engine operating condition is further enhanced, the rack push rod 404 moves further, making the communication area between the second notch 602 and the second radial channel 301 further increased. The elastic nozzle mechanism 9 moves further towards the exhaust port 507 of the turbine casing 5, causing the movable nozzle guide vanes 901 to retract further and thereby further increasing the total throat area of the turbine nozzle.

The distance between the end surface of the cylindrical protrusions 1302 of the spring seat 1303 and the end surface of the pull rod seat 12 near the exhaust port 507 is equal to the width of the fixed nozzle guide vanes 701. When the pull rod seat 12 moves the movable nozzle guide vanes 901 by a distance equal to the width of the turbine nozzle, the pull rod seat 12 is stopped by the cylindrical protrusions 1302 of the spring seat 1303. At this point, the end surfaces of the movable nozzle guide vanes 901 are fully retracted from the turbine nozzle fluid channel, achieving the state of maximum adjustable flow capacity for the turbine.

Under the high operating condition of the engine, in addition to regulating the turbine flow by changing the positions of the movable nozzle guide vanes 901, the first notch 601 remains in communication with the leaf-shaped notches 204, allowing a portion of the airflow in the turbine device to still pass from the leaf-shaped notches 204 in the first annular chamber 2 to the downstream area of the turbine nozzle.

When the engine transitions from the high operating condition to a lower operating condition, the pressure in the chamber of the pneumatic actuator 403 decreases, and the gear rotating sleeve 6 rotates in an opposite direction due to the contraction of the rack push rod 404. First, the communication area between the second notch 602 and the second radial channel 301 is closed off. The air within the second annular chamber 3 then flows through the air-bleed hole 302 into the exhaust port 507, causing the pressure inside the second annular chamber 3 to decrease. Simultaneously, the elastic nozzle mechanism 9, driven by the pre-tension force of its internal springs 1301, moves in a direction opposite to the exhaust port 507. The movable nozzle guide vanes 901 progressively extend further into the turbine nozzle fluid channel, thereby reducing the overall flow capacity of the turbine device.

When the elastic nozzle mechanism 9 moves to its maximum position, that is, when the end surfaces of the movable nozzle guide vanes 901 are in contact with the nozzle bottom plate 703, and the engine operating condition further decrease, the gear rotating sleeve 6 further rotates in the opposite direction due to the contraction of the rack push rod 404, until the communication area between the first notch 601 and the first radial channel 203 is closed, preventing the airflow in the inlet duct 501 from bypassing through the interior of the gear rotating sleeve 6.

The turbine device achieves the conversion of the actuator reciprocating motion into rotational motion through the cooperation of the rack actuator 4 and the gear rotating sleeve 6, realizing the movement that the highly complex "four-bar linkage" of traditional variable geometry turbines can accomplish, effectively reducing the number of components, product size and costs, and enhancing the reliability of the turbine device over long-term use. Moreover, the end of the gear rotating sleeve 6 is connected to the inlet duct 501, while the another end of the gear rotating sleeve 6 is closed, which helps to avoid throttling losses during device operation.

Furthermore, the turbine device can achieve different levels of turbine flow capacity adjustment under various engine operating conditions such as the low, medium, and high operating conditions. The turbine device can efficiently guide airflow both before and after the elastic nozzle mechanism 9 is retracted, solving the problem of significant reduction in turbine efficiency caused by the excessively small nozzle opening angle at low-speed operating conditions and the excessively large nozzle opening angle at high engine operating conditions in traditional variable-angle turbines.

It should be noted that, for the first shell 110 and the second shell 120, the first shooting hole 111 and the second shooting hole 131 mentioned in the present invention, terms "first" and "second" are only used to distinguish the different positions, and there is no order of them,

In addition, it should be noted that the orientation or positional relationship indicated by "on", "under", etc. in the invention is based on the orientation or positional relationship shown in the accompanying drawings, and is only for the purpose of simplifying the description and facilitating understanding, rather than indicating or implying that the device or component referred to must have a specific orientation, be constructed and operated in a specific orientation, and therefore cannot be understood as a limitation of the invention.

The various embodiments herein are described in a progressive manner, with each embodiment emphasizing its differences from other embodiments. The same and similar parts between the embodiments can be referred to each other. All combinations of embodiments provided by the invention are within the scope of protection of the invention and will not be repeated here.

The above provides a detailed introduction to the variable geometry turbine device provided by the invention. Specific examples are used herein to explain the principles and implementation methods of the invention. The above embodiments are only used to help understand the method and core idea of the invention. It should be pointed out that for those skilled in the art, several improvements and modifications can be made to the invention without departing from the principles of the invention, and these improvements and modifications also fall within the scope of protection of the claims of the invention.

## Claims

1. A variable geometry turbine device, comprising:
a turbine casing (5), wherein the turbine casing (5) is provided with an inlet duct (501), and defines an exhaust port (507) and a bypass chamber (503) therein; the exhaust port (507) and the bypass chamber (503) are disposed in parallel, and both are in communication with the inlet duct (501); a first annular chamber (2) and a second annular chamber (3) are in communication with each other and defined between the exhaust port (507) and the bypass chamber (503); a first radial channel (203) and a second radial channel (301) are formed just below the bypass chamber (503) and arranged along an axial direction of the bypass chamber (503), the first radial channel (203) is in communication with the first annular chamber (2), the second radial channel (301) is in communication with the second annular chamber (3), and a wall surface of the second annular chamber (3) internally communicated with the exhaust port (507) defines an air-bleed hole (302);
a gear rotating sleeve (6), disposed inside the bypass chamber (503), wherein an end of the gear rotating sleeve (6) defines an opening in communication with the inlet duct (501), and another end of the gear rotating sleeve (6) is closed; a side of the gear rotating sleeve (6) defines a first notch (601) configured to be selectively connected and disconnected to the first radial channel (203), and a second notch (602) configured to be selectively connected and disconnected to the second radial channel (301); and opening and closing of the first radial channel (203) and the second radial channel (301) have a time difference;
a rack actuator (4), connected to the another end being closed of the gear rotating sleeve (6) and configured to drive the gear rotating sleeve (6) to rotate circumferentially;
combined nozzle guide vanes (17), comprising: a fixed nozzle (7) fixedly disposed on a first nozzle wall surface (508) of the turbine casing (5), and an elastic nozzle mechanism (9), wherein the elastic nozzle mechanism (9) is configured to move reciprocally along an axial direction of the exhaust port (507) under a cooperative action of a pressure difference and an elastic force, leaf-shaped notches (204) are defined between the elastic nozzle mechanism (9) and the fixed nozzle (7), and a position of each of the leaf-shaped notches (204) along the radial direction of the exhaust port (507) is lower than a throat position of the combined nozzle guide vanes (17); and
a turbine (10), disposed inside the turbine casing (5), wherein a rotating shaft of the turbine (10) is coaxially disposed with the exhaust port (507).

2. The variable geometry turbine device as claimed in claim 1, wherein a bypass opening (502) of the bypass chamber (503) connected to the inlet duct (501) has a circular shape, a center of the bypass opening (502) is coaxially disposed with an axis of the bypass chamber (503);
wherein a thickness of a wall of the bypass opening (502) is greater than or equal to 3 millimeters (mm), and a diameter of the bypass opening (502) is at least 3 mm less than a diameter of the bypass chamber (503).

3. The variable geometry turbine device as claimed in claim 1, wherein a gear slot (504) is defined on the bypass chamber (503), the gear rotating sleeve (6) is provided with a rotating sleeve gear (604) at a position corresponding to the gear slot (504), a width of the rotating sleeve gear (604) is equal to a width of the gear slot (504), and an outer diameter of the rotating sleeve gear (604) is equal to an outer diameter of the gear rotating sleeve (6); and
a gear profile of the rotating sleeve gear (604) is an involute curve, teeth of the rotating sleeve gear (604) occupy a circumferential angle which is greater than or equal to a circumferential angle corresponding to the first notch (601), and a number of the teeth of the rotating sleeve gear (604) is greater than or equal to 10.

4. The variable geometry turbine device as claimed in claim 3, wherein a sleeve annular groove (603) is defined between the rotating sleeve gear (604) and the second notch (602) in an axial direction of the rotating sleeve gear (604), and a first metal seal ring (8) is disposed in the sleeve annular groove (603); and
wherein an outer wall surface of the first metal seal ring (8) is tightly fitted on an inner wall surface of the bypass chamber (503), and a remaining wall surface of the first metal seal ring (8) is in clearance fit with a wall surface of the sleeve annular groove (603).

5. The variable geometry turbine device as claimed in any one of claims 1-4, wherein a bypass end cover (1) is disposed on a tail end of the bypass chamber (503), and an outer side of the another end being closed of the gear rotating sleeve (6) is provided with a hemispherical protrusion (605); and
wherein the hemispherical protrusion (605) is coaxially disposed with the gear rotating sleeve (6), and a vertex of the hemispherical protrusion (605) is in clearance fit with the bypass end cover (1).

6. The variable geometry turbine device as claimed in any one of claims 1-4, wherein an annular chamber partition (505) is disposed between the first annular chamber (2) and the second annular chamber (3), and the annular chamber partition (505) defines a set of first leaf-shaped through holes (201) disposed evenly along a circumferential direction of the annular chamber partition (505); and
wherein a set of second leaf-shaped through holes (202) are defined at a position of the first annular chamber (2) near the fixed nozzle (7) and disposed evenly along a circumferential direction of the first annular chamber (2) , the set of first leaf-shaped through holes (201) are in one-to-one correspondence with movable nozzle guide vanes (901) of the elastic nozzle mechanism (9), and the set of second leaf-shaped through holes (202) are in one-to-one correspondence with the movable nozzle guide vanes (901) of the elastic nozzle mechanism (9).

7. The variable geometry turbine device as claimed in any one of claims 1-4, wherein the first notch (601) and the second notch (602) each are disposed in a strip-like manner along a circumferential direction of the gear rotating sleeve (6); and
wherein the first notch (601) occupies a circumferential space of 30° to 60° along the circumferential direction of the gear rotating sleeve (6), the second notch (602) occupies a circumferential space of less than or equal to 20° along the circumferential direction of the gear rotating sleeve (6), and starting positions of the first notch (601) and the second notch (602) are at a same position along the circumferential direction of the gear rotating sleeve (6).

8. The variable geometry turbine device as claimed in any one of claims 1-4, wherein the rack actuator (4) comprises: an air intake hose (401), an air intake port (402), a pneumatic actuator (403), and a rack push rod (404);
wherein a rack portion of the rack push rod (404) is in mesh with a gear portion of the gear rotating sleeve (6); and
wherein the air intake port (402) is configured to be connected to an air passage of a turbocharger compressor outlet or an air passage of an intercooler outlet through the air intake hose (401).

9. The variable geometry turbine device as claimed in any one of claims 1-4, wherein an opening size of the air-bleed hole (302) is 5% to 15% of a width of the second radial channel (301).

10. The variable geometry turbine device as claimed in any one of claims 1-4, wherein the fixed nozzle (7) comprises a nozzle bottom plate (703), and fixed nozzle guide vanes (701) disposed on the nozzle bottom plate (703); the nozzle bottom plate (703) is press-fitted on a second nozzle wall surface (702) of the turbine casing (5), and a height of each of the fixed nozzle guide vanes (701) is equal to a nozzle width of the turbine casing (5); and
wherein the elastic nozzle mechanism (9) comprises movable nozzle guide vanes (901), the movable nozzle guide vanes (901) are in one-to-one correspondence with the fixed nozzle guide vanes (701), and a maximum travelling distance of the movable nozzle guide vanes (901) along the axial direction of the exhaust port (507) is equal to the height of each of the fixed nozzle guide vanes (701).

11. The variable geometry turbine device as claimed in claim 10, wherein an installation direction of each of the fixed nozzle guide vanes (701) and an installation direction of each of the movable nozzle guide vanes (901) are the same, and a vane installation angle of each of the fixed nozzle guide vanes (701) and the movable nozzle guide vanes (901) is in a range of 65° to 75°; and
wherein each of the fixed nozzle guide vanes (701) and each of the movable nozzle guide vanes (901) have a same vane shape, the fixed nozzle guide vanes (701) and the movable nozzle guide vanes (901) have a same vane number, the vane shape comprises one of an airfoil shape, a dolphin shape, a wedge shape and a strip shape, and the vane number is in a range of 9 to 30.

12. The variable geometry turbine device as claimed in claim 10, wherein the elastic nozzle mechanism (9) comprises: a pull rod seat (12) and a spring support structure (13), and the spring support structure (13) comprises springs (1301) and a spring seat (1303); and
wherein each of the movable nozzle guide vanes (901) is connected to a side of the pull rod seat (12), another side of the pull rod seat (12) is connected to an end of each of the springs (1301), another end of each of the springs (1301) is connected to the spring seat (1303), and the spring seat (1303) is connected to the turbine casing (5).

13. The variable geometry turbine device as claimed in claim 12, wherein a radial slit (14) is defined between the spring seat (1303) and the exhaust port (507).

14. The variable geometry turbine device as claimed in claim 12, wherein an outer side of the pull rod seat (12) is provided with an outer annular surface (1201), an inner side of the pull rod seat (12) is provided with an inner annular surface (1203), the outer annular surface (1201) defines a first seal annular groove (1202), the inner annular surface (1203) defines a second seal annular groove (1204), a second metal seal ring (16) is disposed in the first seal annular groove (1202), and a third metal seal ring (15) is disposed in the second seal annular groove (1204); and
wherein an outer side of the second metal seal ring (16) and an outer side of the third metal seal ring (15) each are respectively tightened against an inner wall surface and an outer wall surface of the second annular chamber (3) by their own pre-tightening forces, a side wall surface of the second metal seal ring (16) is in clearance fit with a wall surface of the first seal annular groove (1202), and a side wall surface of the third metal seal ring (15) is in clearance fit with a wall surface of the second seal annular groove (1204).

15. The variable geometry turbine device as claimed in claim 12, wherein an inner side of the spring seat (1303) is provided with at least three cylindrical protrusions (1302) evenly disposed along a circumferential direction of the spring seat (1303), the at least three cylindrical protrusions (1302) are configured to positionally limit the pull rod seat (12), and an outer periphery of each of the at least three cylindrical protrusions (1302) is sleeved with a corresponding one of the springs (1301).
